# EUROPÄISCHE PATENTANMELDUNG

(11) **EP 3 345 495 A1**
(43) Veröffentlichungstag der Anmeldung: **11.07.2018**
(21) Anmeldenummer: 17150396.4
(22) Anmeldetag: 05.01.2017
(51) Int. Cl.: A23L 33/10, A23L 33/105, A23L 33/115, A23L 33/15

(54) **NAHRUNGSERGÄNZUNGSMITTELPRÄPARAT**

(71) Anmelder: PM-International AG, 5445 Schengen (LU)
(72) Erfinder: SORG, Rolf, L-5444 Sehengen (LU); KÜHNE, Tobias, 54497 Morbach (DE); MESSER, Wlhelm, 54451 Irsch (DE); LAUINGER, Christian, 76275 Ettlingen (DE)
(74) Vertreter: Zech, Stefan Markus

(57) **Zusammenfassung**

Die Erfindung betrifft ein Nahrungsergänzungsmittelpräparat, das insbesondere pulverförmig und/oder als Konzentrat vorliegt, umfassend:
- eine Coenzym-Q10-Komponente, insbesondere eine γ-Cyclodextrin-komplexierte Coenzym-Q10-Komponente und
- eine Lecithin-Komponente, insbesondere Soja-Lecithin-Komponente.

## Beschreibung

Die Erfindung betrifft ein Nahrungsergänzungsmittelpräparat, das insbesondere pulverförmig und/oder als Konzentrat vorliegt.

Der Einsatz von Nahrungsergänzungsmittelpräparaten, beispielsweise im Sport oder zur Förderung der Gesundheit ist bereits bekannt. Nahrungsergänzungsmittelpräparate sind dazu bestimmt, die allgemeine Ernährung, bestehend beispielsweise aus kohlenhydrat- oder eiweißhaltigen Lebensmitteln, wie Nudeln, Fleisch oder dergleichen, oder auch Süßwaren wie Kuchen oder Kekse zu ergänzen. Im Gegensatz zu konventionellen Lebensmitteln und Getränken stellen Nahrungsergänzungsmittelpräparate üblicherweise ein Konzentrat von Nahrungsergänzungsstoffen oder sonstigen Stoffen mit ernährungsspezifischer physiologischer Wirkung dar. Sie werden gewöhnlich in dosierter Form, insbesondere in Form von Kapseln, Pastillen, Tabletten, Pillen, Brausetabletten, Pulverbeuteln, Flüssigampullen, Flaschen mit Tropfeinsätzen und ähnlichen Darreichungsformen von Flüssigkeiten und Pulvern zur Aufnahme in abgemessenen kleinen Mengen vertrieben.

Coenzym Q10 (Ubiquinone) ist eine fettlösliche (lipophile) vitamin-ähnliche Verbindung (Chinon-Derivat mit lipophiler Isoprenoid-Seitenkette, strukturell verwandt mit Vitamin K und Vitamin E). Q10 ist eine körpereigene Substanz und wird als Bestandteil von kosmetischen Cremes und als Nahrungsergänzungsmittel verwendet. Q10 dient als Elektronen- und Protonenüberträger zwischen Komplex I, II und III der Atmungskette. Q10 ist als Coenzym an der oxidativen Phosphorylierung beteiligt, über die ein Großteil (über 95 %) der gesamten Körperenergie (ATP) erzeugt wird. Es wird zum Teil mit der Nahrung aufgenommen oder vom Körper selbst produziert. In jeder Zelle wird die Energie aus der Nahrung in körpereigene Energie (ATP) umgewandelt. Die Organe mit dem höchsten Energiebedarf sind Herz, Lunge und Leber und weisen die höchste Q10-Konzentration auf. Bei Nahrungsergänzungsmittelpräparaten mit Coenzym Q10 wird die sogenannte Bioverfügbarkeit als verbesserungswürdig angesehen. Es wird insbesondere als verbesserungswürdig angesehen, wie das Q10 dem Körper (letztlich der einzelnen Zelle des menschlichen Körpers) zur Verfügung gestellt wird. Insbesondere wird die Wirkstoffaufnahme (hinsichtlich Geschwindigkeit und Effizienz) als verbesserungswürdig angesehen.

Es ist Aufgabe der Erfindung, ein Nahrungsergänzungsmittelpräparat mit Coenzym Q10 vorzuschlagen, wobei die Bioverfügbarkeit des Coenzym Q10 verbessert sein soll.

Unter Bioverfügbarkeit soll insbesondere eine pharmakologische Messkurve für den Anteil des Coenzym Q10 verstanden werden, der unverändert im systemischen Kreislauf (insbesondere Blutkreislauf) zur Verfügung steht. Sie soll angeben, wie schnell und in welchem Umfang das Q10 aufgenommen (resorbiert) wird und am Wirkort (der menschlichen Zelle) zur Verfügung steht.

Die oben genannte Aufgabe wird insbesondere durch ein Nahrungsergänzungsmittelpräparat, das vorzugsweise pulverförmig und/oder als Konzentrat vorliegt, gelöst, wobei das Nahrungsergänzungsmittelpräparat umfasst:
- eine Coenzym-Q10-Komponente, insbesondere eine γ-Cyclodextrinkomplexierte Coenzym-Q10-Komponente und
- eine Lecithin-Komponente, insbesondere Soja-Lecithin-Komponente.

Ein Kerngedanke der Erfindung liegt darin, dass die Coenzym-Q10-Komponente, insbesondere die γ-Cyclodextrin-komplexierte Coenzym-Q10-Komponente zusammen mit einer Lecithin-Komponente, insbesondere einer Soja-Lecithin-Komponente zur Verfügung gestellt wird. Dadurch kann die Bioverfügbarkeit verbessert werden. Insbesondere kann die Effizienz der Wirkstoffaufnahme gesteigert werden.

Insbesondere handelt es sich bei der Coenzym-Q10-Komponente um eine γ-Cyclodextrin-komplexierte Coenzym-Q10-Komponente. Dabei wurde erkannt, dass gerade eine derartige (γ-Cyclodextrin-komplexierte) Coenzym-Q10-Komponente und die Lecithin-Komponente, insbesondere eine Soja-Lecithin-Komponente in Kombination zu einer effizienteren Aufnahme des Coenzym Q10 führen.

Die γ-Cyclodextrin-komplexierte Coenzym-Q10-Komponente kann durch CAVAMAX^{®} W8 CoQ10 der Wacker Chemie AG (Zusammensetzung gemäß 30. November 2016) bereitgestellt werden (oder eine identische oder analoge Komponente). Bei einer derartigen Ausbildung der Coenzym-Q10-Komponente kann eine besonders effektive Aufnahme des Coenzym Q10 erfolgen.
CAVAMAX^{®} W8 CoQ10 ist ein γ-Cyclodextrin-komplexiertes Coenzym Q10 mit hoher Wasserlöslichkeit und hoher Aufnahmeeffizienz, insbesondere menschlichen CaCo-2-Zellen (menschliche Epithelzellen/Darmschleimhaut). In verschiedenen Studien konnte eine erhöhte Aufnahmeeffizienz belegt werden. Weiterhin konnte eine ausgeprägte Mizellierung nachgewiesen werden. Weiterhin konnte eine hohe Bioverfügbarkeit (Plasma-Konzentration von CoQ10) gemessen und nachgewiesen werden. In der erfindungsgemäßen Kombination mit der Lecithin-Komponente wird diese Bioverfügbarkeit bzw. Aufnahmeeffizienz nochmals signifikant gesteigert.

Vorzugsweise umfasst das Nahrungsergänzungsmittelpräparat eine Vitamin-E-Komponente. Vitamin E ist eine fettlösliche Substanz mit anti-oxidativer Wirkung und kann dazu beitragen, die Zellen vor oxidativem Stress zu schützen. Insgesamt ergänzt das Vitamin E die positive Wirkung des Nahrungsergänzungsmittelpräparates mit der Coenzym-Q10-Komponente und der Lecithin-Komponente, so dass die Körperzellen wirksam unterstützt werden.

Vorzugsweise ist weiterhin eine Pfefferkomponente, insbesondere eine schwarze Pfefferkomponente, vorzugsweise ein Extrakt aus schwarzem Pfeffer, insbesondere Bioperin vorgesehen. Bioperin enthält Piperin, ein Piperidin-Alkaloid, das aus schwarzem Pfeffer isoliert wird. Im Allgemeinen erhöht die Pfefferkomponente, insbesondere ein Piperin aus schwarzem Pfefferextrakt den Plasma-Level von Q10 nach oraler Aufnahme und wirkt besonders mit den übrigen Komponenten (insbesondere der Coenzym-Q10-Komponente und der Lecithin-Komponente) zusammen.

Das Nahrungsergänzungsmittelpräparat kann weiterhin eine Curcuma-Komponente umfassen. Dadurch wird die positive Wirkung des Nahrungsergänzungsmittelpräparates weiter gesteigert.

Weiterhin kann eine Steviakomponente, insbesondere ein Steviaextrakt, vorzugsweise Steviosid vorgesehen sein. Ein zum Einsatz kommendes Steviolglykosid (Wild-Stevia-RA-98) kann verwendet werden. Durch eine derartige Steviakomponente wird eine natürliche Süßung bereitgestellt. Weiterhin kann eine Zuckerkomponente, insbesondere Fructose-Komponente (insbesondere als Trägermaterial) vorgesehen sein. Weiterhin kann eine Zitronensäure-Komponente als Säuerungsmittel vorgesehen sein. Beta-Carotin kann ggf. vorgesehen sein, insbesondere um die Produktfarbe abzurunden. Weiterhin können (natürliche) Aromastoffe zur Aromatisierung vorgesehen sein.

5 g des Nahrungsergänzungsmittelpräparates enthalten vorzugsweise von der Coenzym-Q10-Komponente 1,0 mg bis 100,0 mg, weiter vorzugsweise 10,0 mg bis 50,0 mg, weiter vorzugsweise 25,0 mg bis 35,0 mg, insbesondere 30 mg.

Vorzugsweise enthalten 5 g des Nahrungsergänzungsmittelpräparates 2,0 mg bis 200,0 mg der Lecithin-Komponente, weiter vorzugsweise 20,0 mg bis 100,0 mg, weiter vorzugsweise 40,0 mg bis 60,0 mg, insbesondere 50 mg der Lecithin-Komponente.

5 g des Nahrungsergänzungsmittelpräparates enthalten vorzugsweise 1,2 mg bis 120,0 mg der Vitamin-E-Komponente, weiter vorzugsweise 12,0 mg bis 60,0 mg, weiter vorzugsweise 28,0 mg bis 42,0 mg, insbesondere 36 mg der Vitamin-E-Komponente.

5 g des Nahrungsergänzungsmittelpräparates enthalten vorzugsweise 0,02 mg bis 2,00 mg von der Pfefferkomponente, vorzugsweise 0,20 mg bis 1,00 mg, noch weiter vorzugsweise 0,40 mg bis 0,60 mg, insbesondere 0,50 mg der Pfefferkomponente.

Das Nahrungsergänzungsmittelpräparat wird vorzugsweise in Einzelportionen, insbesondere Tagesportion, beispielsweise in Beuteln (Sachets), abgepackt. Eine Einzelportion kann 1 g bis 20 g, vorzugsweise 2 g bis 10 g, insbesondere 5 g des Nahrungsergänzungsmittelpräparates enthalten.

Weitere Ausführungsformen ergeben sich aus den Unteransprüchen.

Nachfolgend wird ein Ausführungsbeispiel der Erfindung erläutert.

Nachfolgend sind Zutaten des Ausführungsbeispiels aufgeführt. Bei dem Ausführungsbeispiel handelt es sich um ein Nahrungsergänzungsmittelpräparat in Pulverform, wobei Portionen von (zirka) 5 g in einzelne Päckchen (Sachets) abgepackt sind. 30 dieser Päckchen (Beutel) können in einer Schachtel (Faltschachtel) untergebracht sein.

Inhaltsstoffe des Ausführungsbeispiels (in einem 5 g-Päckchen):
- CAVAMAX^{®} W8 CoQ10 (in der Zusammensetzung und Beschaffenheit gemäß 30. November 2016): 30 mg
- Bioperine^{®} (in der Zusammensetzung und Beschaffenheit gemäß 30. November 2016): 0,5 mg
- Soja-Lecithin: ≥ 0,05 g
- Vitamin E: 36 mg
- Steviolglykosid (Wild-Stevia RA98)
- Natürliches Aroma (wild)
- Fruktose
- Zitronensäure
- β-Karotin (optional).

## Patentansprüche

1. Nahrungsergänzungsmittelpräparat, das insbesondere pulverförmig und/oder als Konzentrat vorliegt, umfassend:
- eine Coenzym-Q10-Komponente, insbesondere eine γ-Cyclodextrin-komplexierte Coenzym-Q10-Komponente und
- eine Lecithin-Komponente, insbesondere Soja-Lecithin-Komponente.

2. Nahrungsergänzungsmittelpräparat nach Anspruch 1, **gekennzeichnet durch**:
- eine Vitamin-E-Komponente.

3. Nahrungsergänzungsmittelpräparat nach Anspruch 1 oder 2, **gekennzeichnet durch**:
- eine Pfefferkomponente, insbesondere eine schwarze Pfefferkomponente, vorzugsweise ein Extrakt aus schwarzem Pfeffer, insbesondere Bioperin.

4. Nahrungsergänzungsmittelpräparat nach einem der vorhergehenden Ansprüche, **gekennzeichnet durch**:
- eine Curcuma-Komponente.

5. Nahrungsergänzungsmittelpräparat nach einem der vorhergehenden Ansprüche, **gekennzeichnet durch**:
- eine Steviakomponente, insbesondere ein Steviaextrakt, vorzugsweise Steviosid und/oder
- eine Zuckerkomponente, insbesondere eine Fructose-Komponente und/oder
- eine Zitronensäure-Komponente und/oder
- eine Beta-Carotin-Komponente.

6. Nahrungsergänzungsmittelpräparat nach einem der vorhergehenden Ansprüche, **dadurch gekennzeichnet, dass**
5 g des Nahrungsergänzungsmittelpräparates enthalten:
- Coenzym-Q10-Komponente: 1,0 mg bis 100,0 mg, vorzugsweise 10,0 mg bis 50,0 mg, weiter vorzugsweise 25,0 mg bis 35,0 mg, insbesondere 30 mg und/oder
- Lecithin-Komponente: 2,0 mg bis 200,0 mg, vorzugsweise 20,0 mg bis 100,0 mg, weiter vorzugsweise 40,0 mg bis 60,0 mg, insbesondere 50 mg und/oder
- Vitamin-E-Komponente: 1,2 mg bis 120,0 mg, vorzugsweise 12,0 mg bis 60,0 mg, weiter vorzugsweise 28,0 mg bis 42,0 mg, insbesondere 36 mg und/oder
- Pfefferkomponente: 0,02 mg bis 2,00 mg, vorzugsweise 0,20 mg bis 1,00 mg, weiter vorzugsweise 0,40 mg bis 0,60 mg, insbesondere 0,50 mg.

7. Nahrungsergänzungsmittelpräparat nach einem der vorhergehenden Ansprüche, **dadurch gekennzeichnet, dass**
das Nahrungsergänzungsmittelpräparat in Einzelportionen, insbesondere Tagesportionen, z.B. in Beuteln, abgepackt ist, wobei eine Einzelportion 1 g bis 20 g, vorzugsweise 2 g bis 10 g, insbesondere 5 g des Nahrungsergänzungsmittelpräparates enthält.
